Europäisches Patentamt

European Patent Office

Office européen des brevets

(19)

(11) **EP 1 049 046 A1**

(12) **EUROPÄISCHE PATENTANMELDUNG**

(43) Veröffentlichungstag:
**02.11.2000 Patentblatt 2000/44**

(51) Int Cl.$^7$: **G06T 7/00**

(21) Anmeldenummer: **99108091.2**

(22) Anmeldetag: **23.04.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **SIEMENS AKTIENGESELLSCHAFT
80333 München (DE)**

(72) Erfinder:
• **Köhler, Thorsten Dr.
93049 Regensburg (DE)**
• **Ertl, Ludwig
93057 Regensburg (DE)**
• **Zittlau, Dirk
92348 Berg (DE)**

(54) **Verfahren und Vorrichtung zur Ermittlung der Position eines Objektes innerhalb einer Szene**

(57) Die Position eines Objektes innerhalb einer Szene, insbesondere des Kopfes eines Beifahrers in einem Fahrzeug, wird dadurch ermittelt, daß aus zwei von einer Kamera nacheinander aufgenommenen Bildern ein Differenzbild erzeugt wird, in dem nur die Kontur sich bewegender Objekte aufscheint, wobei die Konturen der Differenzbilder zur Berechnung der Position verwendet werden.

## FIG 1

EP 1 049 046 A1

**Beschreibung**

Die Erfindung betrifft ein Verfahren und eine Vorrichtung zur Ermittlung der Position eines Objektes innerhalb einer Szene, insbesondere der Position des Kopfes eines Beifahrers in einem Fahrzeug.

In den letzten Jahren haben sich Airbag-Systeme zur Verminderung von Verletzungen bei Unfällen in Kraftfahrzeugen durchgesetzt und insgesamt bewährt. Mit zunehmender Verbreitung der Airbags wurden Einzelfälle bekannt, in denen der Airbag zu einer Verletzung insbesondere von auf dem Beifahrersitz befindlichen Personen beitrug. Der Grund liegt meist darin, daß das Airbagsystem über keine zuverlässige Information über die Position des Beifahrers verfügt. Der Aufblasvorgang des Airbags wird für Extremsituationen ausgelegt, d.h. eine erwachsene, angeschnallte Person darf beim Unfall nicht bis zur Armaturentafel durchschlagen. Befindet sich der Kopf des Beifahrers aber zum Aufblaszeitpunkt zu dicht an der Armaturentafel (out-of-position), dann kann diese Auslegung des Airbagsystems zu schweren Verletzungen führen. Es befinden sich zahlreiche Systeme in der Entwicklung, mit der für dieses Problem Abhilfe geschaffen werden soll. Beispielsweise wird versucht, mit Hilfe von Laser-Triangulationssensoren mittlere Entfernungen in dem jeweils untersuchten Fahrzeuginnenraum zu messen, gegebenenfalls unter Zuhilfenahme von Ultraschall, und daraus die Position des Beifahrers bzw. von dessen Kopf zu ermitteln. Eine Schwierigkeit besteht dabei darin, daß der Kopf des Beifahrers nicht zuverlässig von anderen Objekten unterschieden werden kann.

Aus der nicht vorveröffentlichten deutschen Patentanmeldung 198 09 210.5 ist ein Verfahren bekannt, mit dem dem geschilderten Problem abgeholfen werden soll. Bei diesem Verfahren wird der Beifahrersitzraum mit einer Lichtquelle beleuchtet und die beleuchtete Szene mit einer bildgebenden Kamera aufgenommen. Die Beleuchtung erfolgt dabei mit einem Lichtbüschel aus einzelnen enggebündelten Lichtstrahlen, so daß ein zweidimensionales Punktbild erzeugt wird. Aus dem jeweiligen aufgenommenen zweidimensionalen Punktbild wird die Position des Beifahrers ermittelt, indem die Abstände zwischen den Punkten des aktuellen Punktbildes und den entsprechenden Punkten eines ursprünglich aufgenommenen, gespeicherten Referenzbildes ermittelt werden. Das vorgenannte Verfahren ist in seiner Durchführung verhältnismäßig aufwendig, da die Erzeugung des Lichtbüschels aufwendig ist. Des weiteren ist insbesondere bei kontrastschwachen Bildern die Zuordnung zwischen einer Stelle beispielsweise des Kopfes des Beifahrers und den zugehörigen Bildpunkten schwierig.

Der Erfindung liegt die Aufgabe zugrunde, ein Verfahren und eine Vorrichtung zu schaffen, mit dem bzw. der die Position eines Objektes, insbesondere eines sich bewegenden Objektes, wie einem sich verlagernden Beifahrer, genau und in einfacher durchführbarer Weise ermittelbar ist.

Diese Aufgabe wird mit einem Verfahren gemäß dem Anspruch 1 gelöst.

Bei dem erfindungsgemäßen Verfahren wird ein Differenzbild erzeugt, in dem die Kontur des hinsichtlich seiner Position zu ermittelnden Objektes nur bei einer Bewegung des Objektes aufscheint. Auf diese Weise werden in einer Szene automatisch nur die sich bewegenden Objekte erfaßt, was die Bildauswertung erheblich vereinfacht und gleichzeitig sicherer macht.

Die Unteransprüche 2 und 3 sind auf zwei vorteilhafte Ausführungsformen des erfindungsgemäßen Verfahrens gerichtet.

Der Anspruch 4 kennzeichnet den grundsätzlichen Aufbau einer Vorrichtung, mit der die Erfindungsaufgabe gelöst wird.

Die erfindungsgemäße Vorrichtung muß je nach Einsatzzweck nicht notwendigerweise mit einer Fremdlichtquelle arbeiten, sondern kann beispielsweise Tageslicht benutzen.

Die Ermittlung der Position des Objekts erfolgt lediglich durch die Auswertung aufeinanderfolgend aufgenommener Bilder mittels einer geeigneten Auswertungs-Software. Es wird keine komplizierte Lichtquelle benötigt.

Die Unteransprüche 5 und 6 sind auf vorteilhafte Weiterbildungen der ganz allgemein zur Positionsermittlung von Objekten geeigneten Vorrichtung gerichtet.

Die Ansprüche 7 bis 10 sind speziell auf die Verwendung der erfindungsgemäßen Vorrichtung zur Ermittlung der Position des Kopfes eines Beifahrers in einem Fahrzeug gerichtet.

Der Vorteil der Erfindung liegt insbesondere in der Robustheit des Auswerteverfahrens, das verläßliche Ergebnisse liefert.

Die Erfindung wird im folgenden anhand schematischer Zeichnungen beispielsweise und mit weiteren Einzelheiten erläutert.

Es stellen dar:

Fig. 1 eine Aufsicht auf einen Fahrzeuginnenraum mit Fahrer und Beifahrer und ein Blockschaltbild der erfindungsgemäßen Vorrichtung und

Fig. 2 ein Ablaufdiagramm des erfindungsgemäßen Verfahrens.

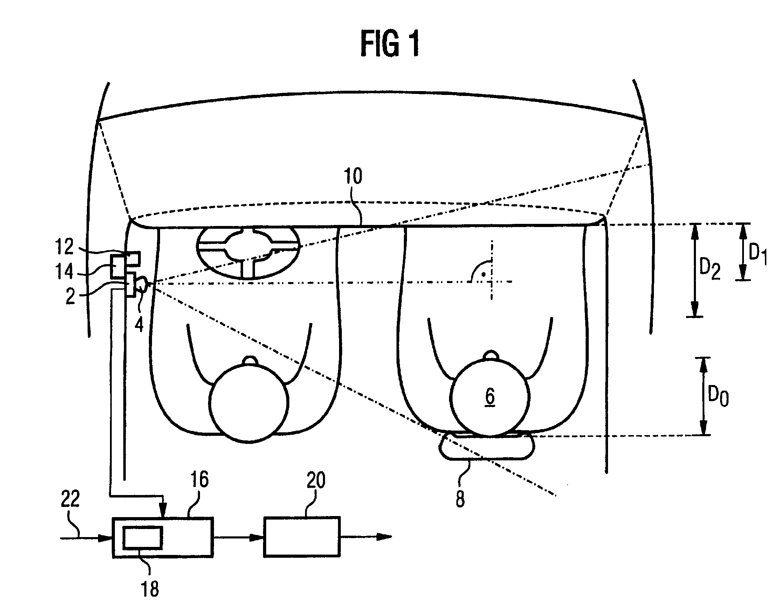

Gemäß Fig. 1 ist links über dem Fahrer eines Fahrzeugs beispielsweise im Bereich des oberen Lenkholms der Karosserie eine CCD oder CMOS Kamera 2 angebracht, die mit einem Weitwinkelobjektiv 4 ausgerüstet ist. Die optische Achse A (doppelt punktiert eingezeichnet) der Kamera 2 ist derart ausgerichtet, daß sie eine Ebene senkrecht schneidet, in der sich der Kopf 6 eines Beifahrers normalerweise bewegt, wenn sich der Beifahrer aus seiner hintersten oder aufrechten Stellung, in der der Kopf 6 annähernd an einer Kopfstütze 8 anliegt, insgesamt nach vorne bewegt oder nach vorne in Richtung auf die Armaturentafel 10 beugt. Der Sichtwinkel der Kamera 2 und damit deren Bildbereich (strichpunktiert eingezeichnet) reicht von der Kopfstütze 8 bis zur Armaturentafel 10 und erfaßt damit den gesamten Bewegungsbereich des Beifahrers bzw. von dessen Kopf 6.

Es versteht sich, daß die Kamera 2 derart angebracht ist, daß ihr Sichtfeld weder von einer nichtdargestellten Fahrersonnenblende abgeschattet wird, noch durch den Kopf des Fahrers. Dazu ist die Kamera 2 möglichst hoch angebracht, gegebenenfalls am Dachhimmel etwas nach innen versetzt.

Softwaremäßig wird auf dem Bildspeicher der Kamera 2 ein Meßfeld vordefiniert, das gemäß Fig. 1 vor der Kopfstütze 8 des Beifahrersitzes liegt. In diesem Meßfeld wird in später definierter Weise ein Template erstellt und die Konturverfolgung gestartet.

Eine CMOS Kamera hat gegenüber einer CCD Kamera den Vorteil, daß nur die Bildinformation in der Meßbox ausgelesen werden muß, wodurch die Auslesezeit auf wenige Millisekunden abgesenkt werden kann.

Für Nachtfahrten ist neben der Kamera 2 eine Infrarotlichtquelle 12 angebracht, die bei Nachtfahrten zur Ausleuchtung dient. Vorteilhafterweise ist das Objektiv mit einem Kantenfilter zur Begünstigung des nahen IR-Bereiches und Ausblendung des visuellen Spektralbereiches versehen.

Die Infrarotlichtquelle 12 wird von der Kamera 2 über die Leitung 14 getriggert. Zur Bildübertragung ist der Speicher der Kamera mit einem Steuergerät 16 verbunden, in dem die nötige Software abgelegt ist und das über einen Bildspeicher 18 verfügt, in dem mindestens fünf Bilder abgelegt werden können. An dem Ausgang des Steuergerätes 16 ist ein Airbagsteuergerät 20 angeschlossen. Ein weiterer Eingang 22 des Steuergeräts 16 ist an einen Bremsdruckgeber oder ein ABS-Steuergerät angeschlossen.

In der Fig. 1 bedeutet $D_0$ eine kritische Entfernung zwischen dem Kopf 6 des Beifahrers und der Kopfstütze 8, wenn sich der Kopf vorverlagert. D1 und D2 sind zwei kritische Abstände zwischen dem Kopf 6 und der Armaturentafel 10.

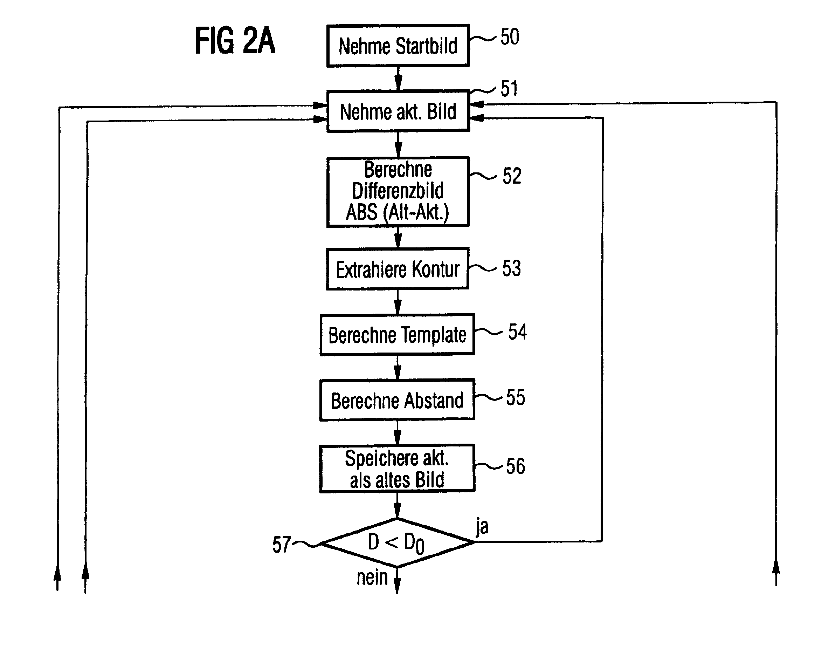

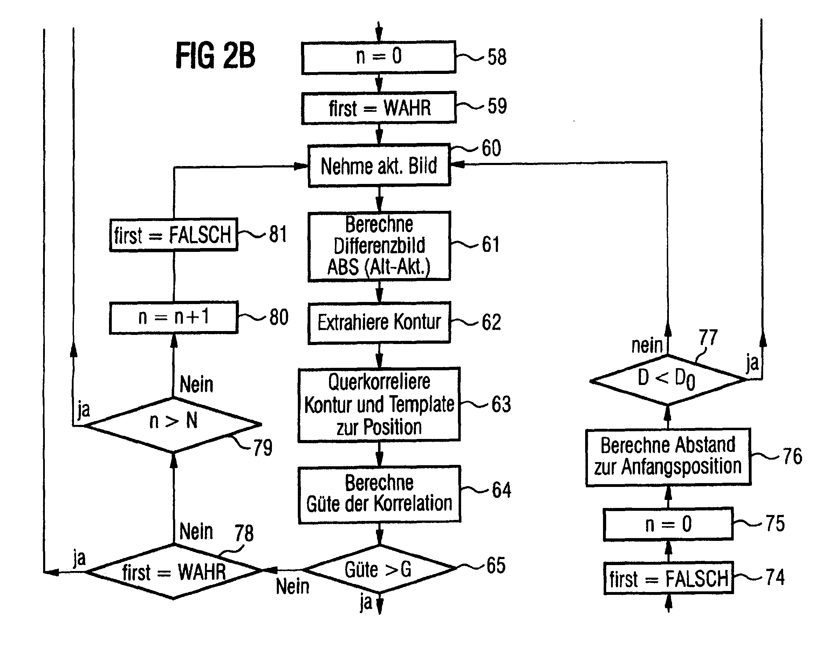

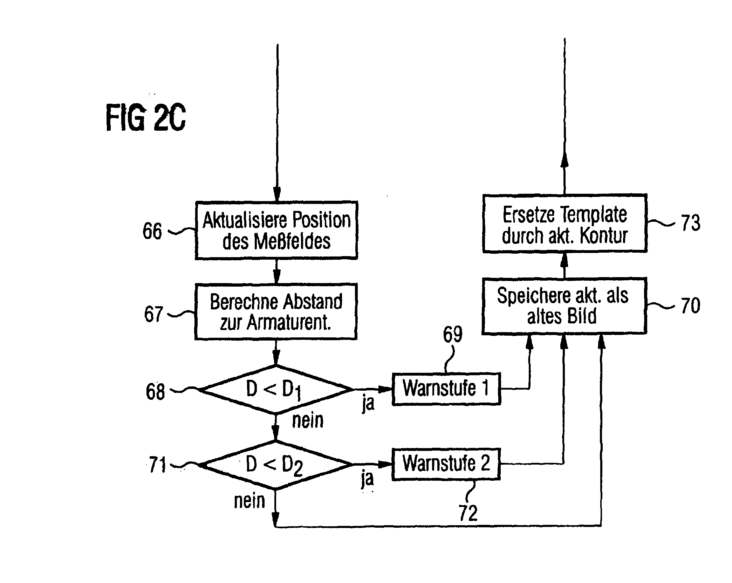

Ein bevorzugtes Flußdiagramm der in der erfindungsgemäßen Vorrichtung ablaufenden Verfahrensschritte ist in Fig. 2 dargestellt und wird im folgenden erläutert:

Im Gegensatz zur Analyse von statischen Szenarien bzw. Einzelbildern beruht das vorliegende Verfahren auf der Analyse von sich ändernden Szenarien, d.h. Bildfolgen. Der Grund dafür ist, daß im Fall statischer Szenarien eine hohe Rate von Fehlklassifikationen zu erwarten ist. Auf Einzelbildern ist es schwierig, Konturen von Objekten zusammenzusortieren (z.B. Kopf mit Haaren und Gesicht in Seitenansicht zusammenzufassen und von der Kopfstütze, dem Sitz und dem Fensterrahmen zu unterscheiden). Selbst wenn aus einem Einzelbild beispielsweise die Information "ellipsoide Form mit Kopfgröße nahe am Armaturentafel gefunden" extrahiert wurde, ist die Gefahr einer Fehlklassifikation weiterhin hoch. Es könnte sich auch um einen Fußball auf dem Schoß des Beifahrers handeln.

Das anhand der Fig. 2 beispielsweise erläuterte Verfahren stellt eine völlig andere Vorgehensweise dar. Basis der Analyse sind immer Differenzbilder DB direkt aufeinanderfolgender Einzelbilder E.

Es gilt:

$$DB(i,j,) = ABS(E_{(n-1)}(i,j)- E_{(n)}(i,j));$$

dabei sind i,j die zweidimensionalen Koordinaten von Bildpunkten, deren Intensität E ist.

Nur wenn sich ein Objekt bewegt, zeichnet sich seine Kontur im Differenzbild ab und läßt sich dann leicht segmentieren. Das Verfahren geht davon aus, daß sich der Kopf 6 des Beifahrers die meiste Zeit in Normalposition, d.h. nahe der Kopfstütze 8 befindet. Bewegt sich der Kopf 6 in Richtung Armaturentafel 10, dann wird die Kontur des Kopfes verfolgt und der Abstand zur Armaturentafel berechnet. Dabei wird zur Zeitersparnis bzw. Aufwandsminderung nur ein Meßfenster von etwa doppelter Kopfgröße auf den Kopf zentriert untersucht. Die Grundzüge der Konturverfolgung sind in den Ansprüchen 2 und 3 enthalten, aus denen ersichtlich ist, daß auf eine genauere Konturverfolgung übergegangen wird, wenn sich der Kopf des Beifahrers in einen Gefahrenbereich hinein bewegt.

Die Schritte der Fig. 2 geben die Details eines bevorzugten Ausführungsbeispiels:

Im Schritt 50 wird ein Startbild eingelesen; im Schritt 51 das aktuelle, von der Kamera aufgenommene Bild. Im Schritt 52 werden nach der vorstehend angegebenen Formel die Bildpunkte des Differenzbildes berechnet. Im Schritt 53 wird aus dem Differenzbild die Kontur extrahiert bzw. hergeleitet. Im Schritt 54 wird ein Template berechnet.

Unter Template wird ein Bild bzw. eine Schablone verstanden, das bzw. die durch Aufeinanderschieben und Mitteln von Konturen erzeugt wird. Ein Vergleich einer aktuellen Kontur mit dem Template muß eine gute Übereinstimmung geben, sonst wird der Kontur nicht gefolgt. Wenn beispielsweise die aktuelle Kontur eine Hand ist, und das Template der Kopf, so wird der Hand nicht gefolgt. Auf diese Weise bildet sich das Template immer besser heraus.

Als erstes Template nach dem Programmstart wird im Schritt 54 die erste Kontur genommen. Der erste Abstand (Schritt 55) ist dann naturgemäß Null. In den weiteren Zyklen wird im Schritt 54 die Verschiebung der aktuellen Kontur (Schritt 53) relativ zum Template bestimmt, um zu mitteln und das Template zu berechnen bzw. zu aktualisieren (Schritt 54) und die Verschiebung im Schritt 55 als aktualisierten Abstand zu nehmen.

Bei der Ermittlung der Templates wird vorteilhafterweise folgendermaßen vorgegangen: Die erste Kontur wird als Start-Template genommen. Bei der Mittelung der nächsten Kontur zum darauffolgenden Template haben Start-Template und Kontur gleiches Gewicht (0,5 : 0,5). Nach dem z.B. 1000sten Schritt hätte auf diese Weise das jeweilige Template ein Gewicht von 1000 zu Gewicht 1 der Kontur. Um zu verhindern, daß neue, aktuelle Konturen mit zunehmender Zeit bedeutungslos werden, kann den neuen Konturen ein festes Gewicht gegeben werden, mit denen sie in die Ermittlung des neuen Templates eingehen.

Im Schritt 56 wird das aktuelle Bild als altes Bild gespeichert. Im Schritt 57 wird ermittelt, ob der Abstand kleiner als ein vorbestimmter kritischer Abstand $D_0$ (Fig. 1) von der Kopfstütze ist. Ist dies der Fall, so beginnt der nächste Zyklus bei 51, wobei im Schritt 52 das Differenzbild aus dem im Schritt 56 gespeicherten Bild und dem aktuellen Bild ermittelt wird.

Wird in dem Entscheidungsschritt 57 entschieden, daß der Abstand größer als ein kritischer Abstand $D_0$ ist, was bedeutet, daß sich der Kopf 6 um eine vorbestimmte Strecke von der Kopfstütze 8 entfernt hat, so wird im Schritt 58 ein Zähler auf n=0 gesetzt. Weiter wird im Schritt 59 eine Variable "first" auf WAHR gesetzt. Im Schritt 60 wird das aktuelle Bild eingelesen und im Schritt 61 wird das Differenzbild aus dem aktuellen Bild und dem im Schritt 56 gespeicherten Bild berechnet. Im Schritt 62 wird dann die Kontur extrahiert.

Im Unterschied zu dem Zyklus der Schritte 51 bis 57 wird nun wegen der genaueren Verfolgung der Kontur des Kopfes im Schritt 63 eine Kreuz- bzw. Querkorrelation zwischen der Kontur und dem Template zur Positionsbestimmung durchgeführt. Dabei wird die Kontur bezüglich des Template verschoben und die Produktsumme der Grauwerte über alle Pixel gebildet. Kontur und Template passen optimal übereinander, wenn dieser Wert sein absolutes Maximum angenommen hat. Aus der notwendigen Verschiebung wird die neue Position bestimmt. Die dabei verwendeten Formeln sind an sich bekannt und werden daher nicht erläutert.

Im Schritt 64 wird die Güte der Korrelation berechnet bzw. bestimmt.

Wenn die Güte größer als ein vorbestimmter Wert G ist, was im Schritt 65 ermittelt wird, wird im Schritt 66 die Position des Meßfeldes aktualisiert bzw. nachgeführt. Im Schritt 67 erfolgt eine Berechnung des Abstandes zur Armaturentafel 10, den das System aus der Bildauswertung oder durch die externe Eingabe kennt. Wenn dieser Abstand unter einem ersten kritischen D1 liegt, was im Schritt 68 ermittelt wird, führt dies in Schritt 69 zur Erzeugung einer Warnstufe 1, die dem Airbagsteuergerät 20 (Fig. 1) mitgeteilt wird. Das System geht anschließend zum Schritt 70.

Wenn im Schritt 68 der Abstand nicht unterhalb des kritischen Wertes D1 liegt, wird im Schritt 71 ermittelt, ob der Abstand unterhalb eines kritischen Wertes D2 liegt. Ist dies der Fall, wird im Schritt 72 Warnstufe 2 ausgelöst und dem Airbagsteuergerät mitgeteilt.

Woraufhin das System zum Schritt 70 weitergeht. Liegt der Abstand nicht unterhalb D2, so geht das System ohne Auslösen einer Warnstufe zum Schritt 70 weiter.

Im Schritt 70 wird das aktuelle Bild als altes Bild gespeichert, woraufhin im Schritt 73 das Template durch die aktuelle Kontur ersetzt wird. Im Schritt 74 wird der Variablen "fist" der Wert FALSCH zugeordnet. Anschließend wird im Schritt 75 der Zähler wiederum auf Null gesetzt. Anschließend wird im Schritt 76 der Abstand zur Anfangsposition bzw. Ausgangsposition berechnet. Wenn dieser Abstand kleiner als $D_0$ ist, was im Schritt 77 ermittelt wird, springt das System zum Schritt 51. Ist dies nicht der Fall, springt das System zum Schritt 60.

Bei unzureichender Güte der Korrelation (Schritt 65) geht das System zum Schritt 78 und überprüft, ob die Variable "first" den Wert WAHR hat. Ist dies der Fall, so springt das System zum Schritt 51. Ist dies nicht der Fall, so wird im Schritt 79 überprüft, ob der Zählerstand über einem vorbestimmten Stand N ist. Ist dies der Fall, so springt das System zum Schritt 51. Ist das nicht der Fall, so wird der Zählerstand in Schritt 80 um Eins erhöht. Im Schritt 81 wird der Variablen der Wert FALSCH zugeordnet und das System arbeitet mit dem Schritt 60 weiter.

Mit der Überprüfung der Korrelation im Schritt 65 wird folgendes erreicht:

Wenn die Güte der Korrelation ein vorgegebenes Maß übersteigt, kann davon ausgegangen werden, daß sich der Kopf und nicht etwa ein Arm oder eine Hand durch das Bild bewegt. In diesem Fall wird das Meßfeld auf die aktuelle Kontur zentriert und das Template durch die aktuelle Kontur ersetzt. Andernfalls wird beim ersten Durchlauf (n=0) sofort zum Beginn (Schritt 51) gesprungen. Wurde die Kontur in dieser Schleife bereits erfolgreich verfolgt, und fehlt im Meßfenster ein Signal, dann befindet sich der Kopf in Ruhe. Nun wird bei einer vorgegebenen Zykluszahl (N) zum Schritt 60 gesprungen, was einem Abwarten in der aktuellen Position entspricht. N bedeutet somit die Maximalzahl von Durchläufen, bei denen hintereinander in dem Meßfeld keine Kopfkontur gemessen werden darf, damit das Meßfeld in die Ausgangsposition zurückgesetzt wird. Das System wartet also einige Zeit auf eine Kopfbewegung. Erst wenn diese nicht eintritt, springt es in die Ausgangsposition zurück.

Der Vorteil des erfindungsgemäßen Verfahrens liegt in seiner Robustheit. Es wird mit einer plausiblen Anfangsannahme gestartet. Der Kopf ist das höchste Körperteil in dem Meßfenster nahe der Kopfstütze. Wenn sich eine Kontur aus diesem Bereich in Richtung Armaturenbrett bewegt und diese Kontur in der Anfangsphase dem Template entspricht, dann wird die Information an das Airbagsteuergerät weitergeleitet. Damit ist eine Verwechslung des Kopfes mit z.B. einem Fußball auf dem Schoß des Beifahrers praktisch ausgeschlossen. Eine einzelne Fehlmessung kann im Gegensatz zu der statischen Analyse noch nicht dazu führen, daß der Airbag abgeschaltet wird bzw. seine Auslösung verändert wird. Wenn die Kette der Analysen an einer Stelle reißt, beispielsweise dadurch, daß die zu verfolgende Kontur von dem Algorithmus verloren wird oder ein anderer Fehler auftritt, kann eine Default-Auslösung des Airbags gewählt werden, bei der der Airbag im Falle des Unfalls mit einem vom Fahrzeug- oder Airbaghersteller definierten Verhalten ausgelöst wird. Damit ist sichergestellt, daß die Performance der bestehenden Systeme ohne Innenraumüberwachung nicht verschlechtert wird.

Der Bildspeicher im Steuergerät 16 benötigt bei dem geschilderten Verfahren eine Kapazität von mindestens fünf Bildern, nämlich das aktuelle Bild, die aktuelle Kontur, das vorherige Bild, das Differenzbild und das Template.

Vorteilhafterweise erhält das Steuergerät 16, wie in Fig. 1 mit dem Eingang 22 angedeutet, eine Information über eine Notbremsung. Damit kann die Bedingung, die zu einer Abschaltung des Airbags führt, nochmals verschärft werden, in dem zusätzlich die Information einer Notbremsung gefordert wird. Im Fall der Notbremsung wird sich der Kopf sicher bewegen. Dies steht im Gegensatz zu dem Fall, in dem sich der Beifahrer mit dem Kopf zum Airbag hin vorbeugt (Out-of-Position) um sich z.B. die Schuhe zuzubinden oder einen Gegenstand zu suchen. Sollte der unwahrscheinliche Fall eintreten, daß der Algorithmus des Systems zu Unrecht der Kontur beispielsweise der Hand gefolgt wäre, würde der Airbag fälschlicherweise abgeschaltet werden. Eine Abschaltung des Airbags ist immer mit der Gefahr verbunden, daß der Airbag durch eine Fehlfunktion zu Unrecht abgeschaltet ist und der Beifahrer dann eine Verletzung erleidet, die durch eine Auslösung des Airbags vermeidbar gewesen wäre. Mit der Information über eine Notbremsung wird die Sicherheit gegenüber einer Fehlabschaltung somit erhöht.

Es versteht sich, daß das Differenzbildverfahren auch mit anderen als den beschriebenen Auswertealgorithmen arbeiten kann. Ebenso kann die Kamera an anderen Stellen des Fahrzeugs als den beschriebenen untergebracht sein, beispielsweise nahe dem Innenspiegel am Dach des Fahrzeugs, wobei auch hier die optische Achse möglichst senkrecht zur Bewegungsrichtung des Kopfes des Beifahrers sein sollte.

Das erfindungsgemäße Verfahren bzw. die erfindungsgemäße Vorrichtung kann weiter dahingehend ergänzt werden, daß aus der erfaßten Bahnkurve des Kopfes und seiner errechneten Geschwindigkeit eine Vorhersage errechnet wird, wann und ob der Kopf in den Gefahrenbereich eindringen wird. So ist es möglich, schon wenige Millisekunden vor Erreichen des Gefahrenbereiches eine entsprechende Meldung an das AirbagSteuergerät zu geben.

**Patentansprüche**

1. Verfahren zur Ermittlung der Position eines Objektes innerhalb einer Szene, insbesondere der Position des Kopfes eines Beifahrers in einem Fahrzeug,

bei welchem Verfahren eine Bildfolge der Szene mit einer Kamera aufgenommen wird und durch elektronische Auswertung der Bilder der Bildfolge die aktuelle Position des Objektes errechnet wird,

**dadurch gekennzeichnet**, daß durch Vergleich eines aktuell aufgenommenen Bildes mit einem vorher gespeicherten Bild ein Differenzbild erzeugt wird, in dem die Kontur des Objektes nur bei einer Bewegung des Objektes aufscheint, und

daß die Berechnung der Position des Objektes auf Basis des Differenzbildes erfolgt.

2. Verfahren nach Anspruch 1, **gekennzeichnet durch** den Ablauf folgender Verfahrensschritte, solange sich das Objekt innerhalb eines vorbestimmten Bereiches befindet:

a1) Berechnung des aktuellen Differenzbildes,
b1) Extraktion der aktuellen Kontur des Objekts aus dem aktuellen Differenzbild,
c1) bei erster Kontur nach Verfahrensbeginn: Nehme Kontur als Start-Template; bei allen weiteren Konturen; Beziehe anschließend die aktuelle Kontur gewichtet in das Template ein,
d1) gehe zu a1).

3. Verfahren nach Anspruch 2, **gekennzeichnet** durch den Ablauf folgender Verfahrensschritte, wenn das Objekt aus einem vorbestimmten Bereich hinaus bewegt:

a2) Berechnung des aktuellen Differenzbildes,
b2) Extraktion der aktuellen Kontur aus dem aktuellen Differenzbild,
c2) Berechnung der Objektposition mittels Kreuzkorrelation der aktuellen Kontur mit dem nach Anspruch 2 erzeugten Template,
d2) wenn die Korrelationsgröße ein vorgegebenes Maß übersteigt, Zentrieren eines Meßfensters auf die aktuelle Kontur, Ersetzen des Templates durch die aktuelle Kontur und Weiterfahren gemäß e2); andernfalls Springen zu al); bei fehlendem Differenzbild: Springen zu a2);
e2) wenn die Kontur wieder innerhalb des vorbestimmten Bereiches ist: Springen zu a1);
f2) wenn sich die Kontur in einen vorbestimmten Warnbereich bewegt, Ausgabe eines Alarmsignals;
h2) Springen zu a2).

**4.** Vorrichtung zur Ermittlung der Position eines Objektes innerhalb einer Szene, insbesondere der Position des Kopfes (6) eines Beifahrers in einem Fahrzeug enthaltend

    eine Kamera (2) mit definierter Bildfolgezeit und
    ein Steuergerät (16) mit einer Rechnereinheit, einem Bildspeicher (18) und Auswertungssoftware,

    **dadurch gekennzeichnet**, daß die Auswertungssoftware entsprechend einem der Ansprüche 1 bis 3 arbeitet.

**5.** Vorrichtung nach Anspruch 4, **dadurch gekennzeichnet**, daß der Bildspeicher (18) eine Kapazität zum Speichern von mindestens fünf Bildern aufweist.

**6.** Vorrichtung nach Anspruch 4, **dadurch gekennzeichnet**, daß die Kamera eine CCD oder CMOS Kamera ist.

**7.** Vorrichtung nach einem der Ansprüche 4 bis 6 zur Ermittlung der Position des Kopfes (6) eines Beifahrers in einem Fahrzeug, **dadurch gekennzeichnet**, daß die Kamera (2) derart angeordnet ist, daß ihre optische Achse etwa senkrecht zu einer Ebene gerichtet ist, in der die Bewegungen des Beifahrers zwischen Beifahrersitz und Armaturentafel (10) normalerweise stattfinden und daß die Optik der Kamera den Bereich zwischen Beifahrer und Armaturentafel zumindest annähernd erfaßt.

**8.** Vorrichtung nach einem der Ansprüche 4 bis 7, **dadurch gekennzeichnet**, daß eine Infrarotlichtquelle (12) vorgesehen ist, und die Kamera (2) mit einem Filter versehen ist, der Wellenlängen unterhalb des nahen Infrarotspektralbereiches ausblendet.

**9.** Vorrichtung nach einem der Ansprüche 4 bis 7, **dadurch gekennzeichnet**, daß dem Steuergerät (16) bei einer Notbremsung ein Notbremssignal zugeführt wird.

**10.** Vorrichtung nach Anspruch 7, **dadurch gekennzeichnet**, daßaus der Bahnkurve des Kopfes (6) und dessen Geschwindigkeit das Eindringen des Kopfes in einen Gefahrenbereich prognostiziert und ein AirbagSteuergerät (20) entsprechend aktiviert wird.

**FIG 1**

EP 1 049 046 A1

EP 1 049 046 A1

**FIG 2A**

```
            ┌─────────────────┐
            │  Nehme Startbild │ ~ 50
            └─────────────────┘
                     │
                     ▼
            ┌─────────────────┐
            │  Nehme akt. Bild │ ~ 51
            └─────────────────┘
                     │
                     ▼
            ┌─────────────────┐
            │    Berechne      │
            │  Differenzbild   │ ~ 52
            │  ABS (Alt-Akt.)  │
            └─────────────────┘
                     │
                     ▼
            ┌─────────────────┐
            │ Extrahiere Kontur│ ~ 53
            └─────────────────┘
                     │
                     ▼
            ┌─────────────────┐
            │ Berechne Template│ ~ 54
            └─────────────────┘
                     │
                     ▼
            ┌─────────────────┐
            │ Berechne Abstand │ ~ 55
            └─────────────────┘
                     │
                     ▼
            ┌─────────────────┐
            │  Speichere akt.  │ ~ 56
            │  als altes Bild  │
            └─────────────────┘
                     │
                     ▼
                  ╱───────╲
          57 ~  ╱ D < D₀   ╲  ja
                ╲           ╱
                  ╲───────╱
                     │ nein
                     ▼
```

$D < D_0$

## FIG 2B

$n = 0$ ~58

first = WAHR ~59

Nehme akt. Bild ~60

Berechne
Differenzbild
ABS (Alt-Akt.) ~61

Extrahiere Kontur ~62

Querkorreliere
Kontur und Template
zur Position ~63

Berechne
Güte der Korrelation ~64

Güte > G ~65

first = FALSCH ~81

$n = n+1$ ~80

n > N ~79

Nein

ja

first = WAHR ~78

Nein

Nein

ja

nein    $D < D_0$    ja ~77

Berechne Abstand
zur Anfangsposition ~76

$n = 0$ ~75

first = FALSCH ~74

EP 1 049 046 A1

# FIG 2C

Flussdiagramm:

- 66 — Aktualisiere Position des Meßfeldes
- 67 — Berechne Abstand zur Armaturent.
- 68 — $D < D_1$ — ja → 69 Warnstufe 1 ; nein ↓
- 71 — $D < D_2$ — ja → Warnstufe 2 (72) ; nein
- 70 — Speichere akt. als altes Bild
- 73 — Ersetze Template durch akt. Kontur

EP 1 049 046 A1

**Europäisches Patentamt**

## EUROPÄISCHER RECHERCHENBERICHT

Nummer der Anmeldung

EP 99 10 8091

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 98 48372 A (AUTOMOTIVE SYSTEMS LAB) 29. Oktober 1998 (1998-10-29) * Zusammenfassung * * Seite 3, Zeile 32 - Seite 4, Zeile 2 * * Seite 5, Zeile 1 - Zeile 7 * * Anspruch 18 * * Seite 7, Zeile 11 - Zeile 19 * * Seite 7, Zeile 3 - Zeile 6 * --- | 1-10 | G06T7/00 |
| A | GB 2 311 602 A (ROVER GROUP) 1. Oktober 1997 (1997-10-01) * Zusammenfassung * * Seite 6, Zeile 4 - Zeile 17 * --- | 1-10 | |
| A | US 5 835 613 A (JOHNSON WENDELL C ET AL) 10. November 1998 (1998-11-10) * Zusammenfassung * ----- | 1-10 | |

**RECHERCHIERTE SACHGEBIETE (Int.Cl.7)**

G06T

Der vorliegende Recherchenbericht wurde für alle Patentansprüche erstellt

| Recherchenort | Abschlußdatum der Recherche | Prüfer |
|---|---|---|
| BERLIN | 30. August 1999 | González Arias, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 10 8091

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-08-1999

| Im Recherchenbericht angeführtes Patentdokument | Datum der Veröffentlichung | Mitglied(er) der Patentfamilie | Datum der Veröffentlichung |
|---|---|---|---|
| WO 9848372 A | 29-10-1998 | KEINE | |
| GB 2311602 A | 01-10-1997 | KEINE | |
| US 5835613 A | 10-11-1998 | US 5822707 A | 13-10-1998 |
| | | US 5748473 A | 05-05-1998 |
| | | US 5845000 A | 01-12-1998 |
| | | US 5848802 A | 15-12-1998 |
| | | DE 4492128 T | 27-06-1996 |
| | | JP 9501120 T | 04-02-1997 |
| | | WO 9422693 A | 13-10-1994 |
| | | US 5653462 A | 05-08-1997 |
| | | US 5829782 A | 03-11-1998 |
| | | GB 2289786 A,B | 29-11-1995 |
| | | JP 8198044 A | 06-08-1996 |
| | | GB 2289332 A,B | 15-11-1995 |
| | | GB 2324864 A,B | 04-11-1998 |
| | | US 5901978 A | 11-05-1999 |
| | | US 5629681 A | 13-05-1997 |

EPO FORM P0461

Für nähere Einzelheiten zu diesem Anhang : siehe Amtsblatt des Europäischen Patentamts, Nr.12/82